(19) Europäisches Patentamt
European Patent Office
Office européen des brevets

(11) Publication number : 0 440 433 A2

# (12) EUROPEAN PATENT APPLICATION

(21) Application number : 91300691.2

(22) Date of filing : 30.01.91

(51) Int. Cl.[5] : C08L 81/02, C08L 81/06, C08L 79/08, // (C08L81/02, 81:06, 79:08), (C08L81/06, 81:02, 79:08), (C08L79/08, 81:02, 81:06)

(30) Priority : 30.01.90 US 472152

(43) Date of publication of application : 07.08.91 Bulletin 91/32

(84) Designated Contracting States : BE DE FR GB

(71) Applicant : TONEN CHEMICAL CORP.
4-1-1, Tsukiji, Chuo-ku
Tokyo (JP)

(72) Inventor : Akhtar, Sania, c/o Polymer Engineering Center
The University of Akron
Ohio 44325 (US)
Inventor : White, James L., c/o Polymer Engineering Center
The University of Akron
Ohio 44325 (US)

(74) Representative : Holmes, Michael John et al
Frank B. Dehn & Co. Imperial House 15-19 Kingsway
London WC2B 6UZ (GB)

## (54) Poly (arylene sulfide) - based thermoplastic polymer alloy.

(57) Thermoplastic polymer alloys containing 5-95 weight % of poly (arylene sulfide) resin, 5-80 weight % of poly (aryl sulfones) and 5-95 weight % of polyetherimides are isclosed which have improved physical properties.

EP 0 440 433 A2

## POLY (ARYLENE SULFIDE) - BASED THERMOPLASTIC POLYMER ALLOY

The invention relates to high-impact strength poly (arylene sulfide) ternary blends, and particularly to polymer blends containing a poly (arylene sulfide) resin, a polyetherimide, and a poly (aryl sulfone) resin.

For certain thermoplastic applications, alloys of two or more resins may exhibit a better balance of properties. For example, by admixing resins having desirable physical properties, it is hoped to find resin blends that have inherited at least some of the desired physical properties from each of the resins.

For example, polymer alloys of poly (arylene sulfide) with other resins have been proposed.

Japanese Patent Laid-Open No. 55-45704 discloses a thermoplastic resin composition comprising 30-97 parts by weight of a poly (arylene sulfide) resin, and 70-3 parts by weight of a low-crystallinity thermoplastic resin selected from polycarbonates, polysulfones, polyamides and polyesters, the composition further containing 3-60 weight % of carbon fibers and/or graphite, and 0-20 weight % of fluorine resins.

U.S. Patent 4,017,555 discloses a polymeric alloy of polyphenylene sulfide having recurring units of the formula :

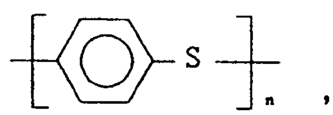

and a polyimide having recurring units of the formula :

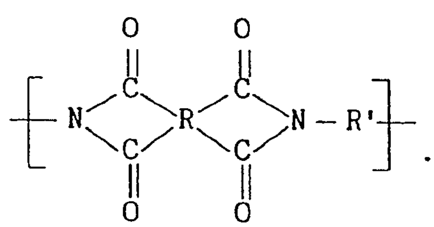

U.S. Patent 4,528,346 discloses a resin composition comprising (A) a polyphenylene sulfide, (B) an epoxy compound, (C) a thermoplastic resin other than (A) and having a melt viscosity of at least 1000 poises at a temperature in the range of from 230 °C to 370°C and (D) optionally a filler.

EP 0,170,065 discloses a composition suitable for use as an insulating material in an electrical device comprising from about 35 to about 65 weight percent of an amorphous polymer selected from a polyarylethersulfone, a polyarylether, a polyetherimide, or a polyarylate ; and from about 65 to about 35 weight percent of a crystalline polymer selected from a poly (arylene sulfide), polyester or a polyamide.

EP 0,266,791 discloses a composition comprising from about 16 to about 45 weight % based on the total composition of a poly (arylene sulfide), from about 16 to about 45 weight % based on the total composition of a sulfone polymer, and from 25 to about 60 weight % based on the total composition of a reinforcing material.

Japanese Patent Laid-Open No. 63-256653 discloses a heat-resistant resin composition comprising an aromatic thioether sulfone polymer and a polyphenylene sulfide.

Japanese Patent Laid-Open No. 63-301255 discloses a polyimide resin composition comprising 99.9-50 weight % of a polyimide and 0.1-50 weight % of a polyphenylene sulfide.

However, poly (arylene sulfide) compositions having a better combination of mechanical properties such as tensile strength, impact strength, etc. have been desired.

An object of this invention is to provide polymer alloys of poly (arylene sulfide) resins and other thermoplastic resins which have desirable mechanical properties.

Another object of this invention is to provide a method of producing poly (arylene sulfide) resin-containing thermoplastic polymer alloys which have better impact resistance than that of polyarylene sulfide itself.

A principal feature of this invention is that polymer alloys of poly (arylene sulfide) resin and polyetherimide and poly (aryl sulfone) resins possess high temperature resistance characteristics and good mechanical properties and are easily fabricated using conventional thermoplastic processing techniques.

That is, the polymer alloy according to the present invention comprises (a) 5-95 weight % of a poly (arylene sulfide), (b) 5-95 weight % of a polyetherimide, and (c) 5-80 weight % of a poly (aryl sulfone).

The method of producing a polymer alloy according to the present invention comprises the step of mixing the poly (arylene sulfide), the polyetherimide, and the poly (aryl sulfone) at a temperature which is sufficiently high to cause the components to form a thermoplastic polymer alloy and sufficiently low to prevent degradation of the components.

The poly (arylene sulfide) resin may be formed of recurring units of the formula :

$$-[Ar\ S]_n-,$$

wherein " - Ar - " is a divalent aromatic group, for example represented by the following formula :

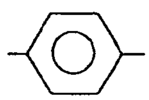 ,

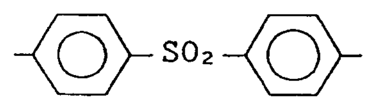 ,

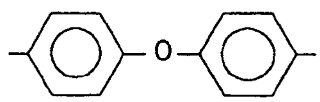 ,

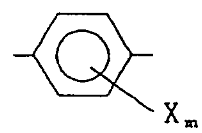 ,

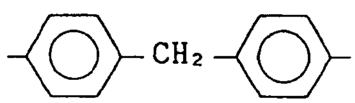 ,

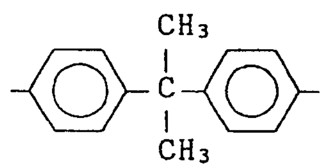

wherein X denotes an alkyl group such as $CH_3$, etc., and m denotes an integer of 1-4.

An especially typical poly (arylene sulfide) resin is phenylene sulfide having a repeating unit represented by the general formula :

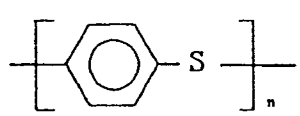 .

The poly (arylene sulfide) used in the present invention usually has a melt viscosity of 20-30,000 poise, preferably 100-15,000 poise at 300°C when measured by a flow tester (L/D=10, $\gamma$ =200 $sec^{-1}$).

The polyetherimide used in the blend preferably comprises essentially chemically combined units of the formula :

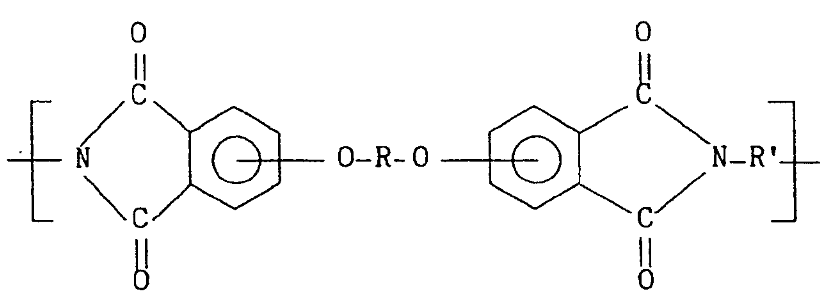 ·····(I)

wherein R is a member selected from the group consisting of

(a) the following divalent organic radicals :

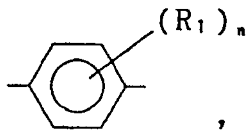

,

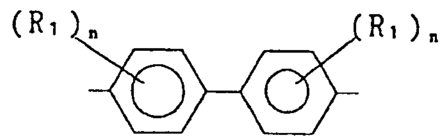

, and

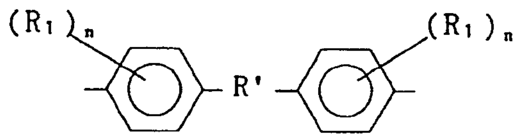

wherein $R_1$ represents a $C_1$-$C_6$ alkyl group or an aryl group, and n represents O or an integer from 1-4. $(R_1)_n$ may differ from each other when more than one such groups are present.

Specific examples of R are as follows :

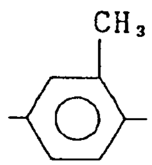

,

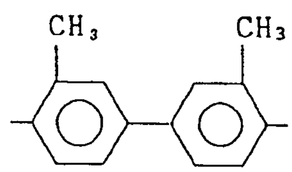

,

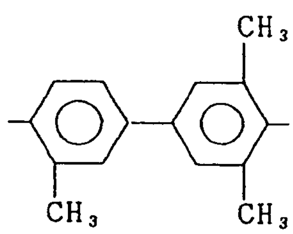

,

and

(b) divalent organic radicals of the general formula :

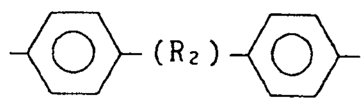

wherein $R_2$ is $-(CH_2)_y-$, y is a whole number equal to 1-5, and R′ is a divalent organic radical selected from the group consisting of (i) aromatic hydrocarbon radicals having 6-20 carbon atoms, (ii) alkylene radicals and cycloalkylene radicals having from 2-20 carbon atoms, (iii) $C_{2-8}$ alkylene terminated polydiorganosiloxanes, (iv) divalent radicals represented by the formula :

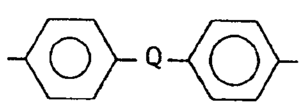

wherein Q is a member selected from the group consisting of :

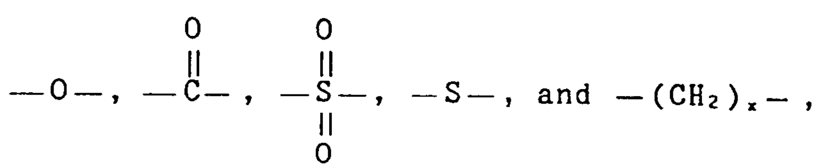

wherein x is a whole number equal to from 1 to 5.

The polyetherimide may be that having the general formula :

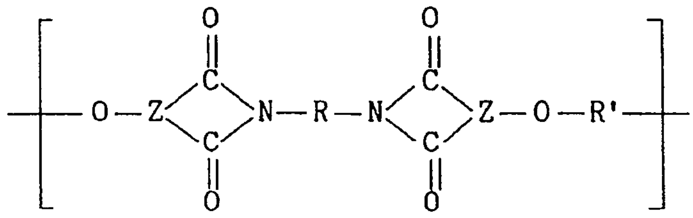 ...... (II)

wherein Z is an aromatic group having one or two benzene rings which may be substituted with a $C_1$-$C_6$ alkyl group, and R and R′ are as defined above.

The polyetherimide may be produced by conventional methods eg. as described in U.S Patents 3,833,544, 3,887,588, 4,017,511, 3,965,125, 4,024,110 .

The polyetherimide used in the present invention usually has an intrinsic viscosity [η] of 0.2 dl/g or more, preferably 0.35 dl/g or more in m-cresol at 25°C.

Preferred polyetherimides are those having recurring units of the formulae :

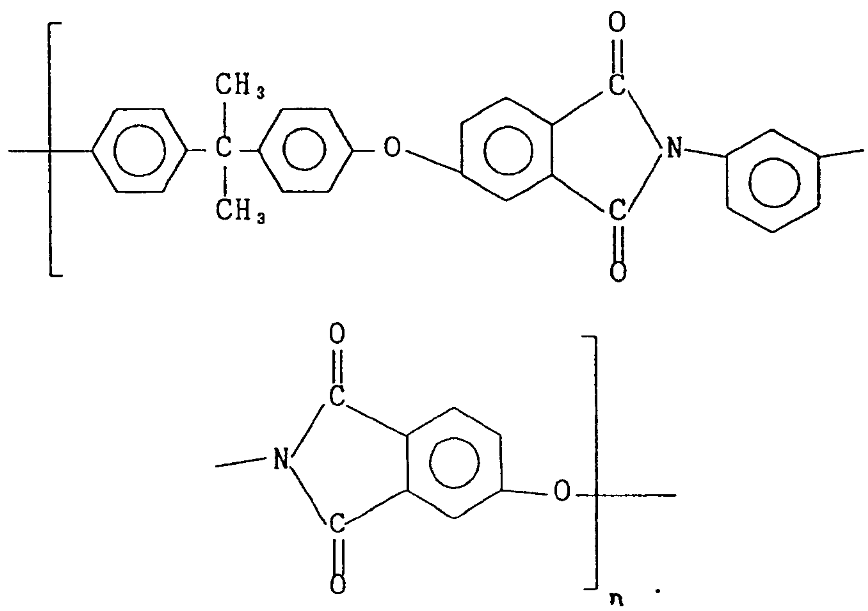

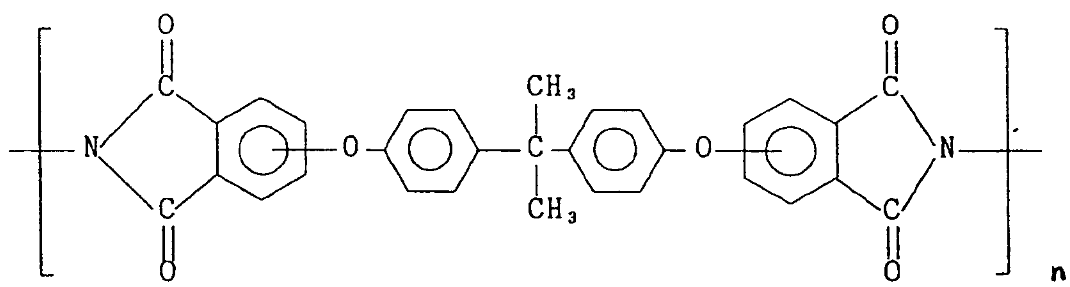

As a poly (aryl sulfone) resin usable in the present invention, a linear polymer containing three kinds of unit bonds consisting of an arylene bond, an ether bond and a sulfone bond, is suitable. Representative examples of these aromatic polysulfone resins include those represented by the following formulae :

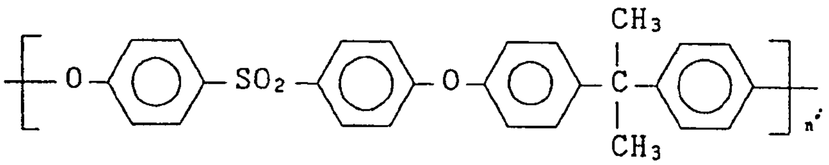,

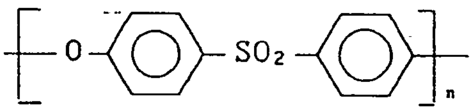,

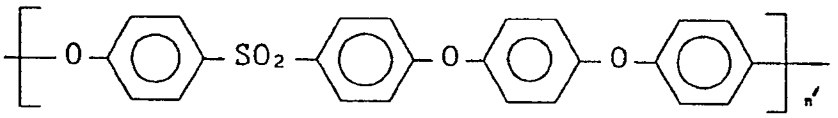,

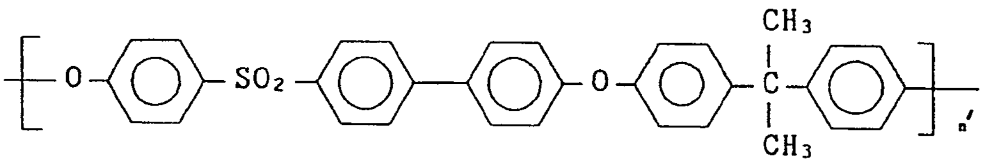,

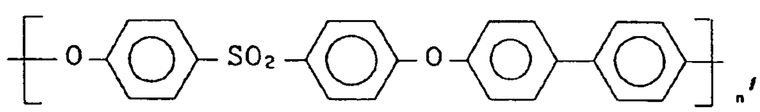,

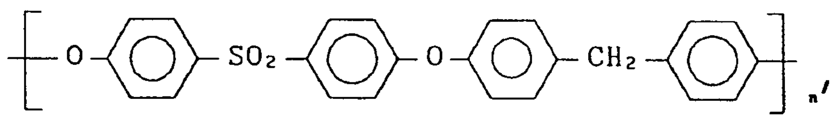,

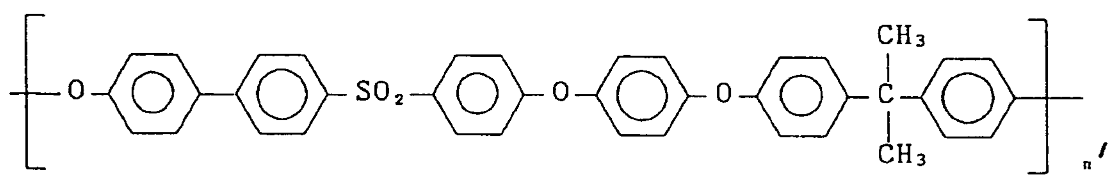,

wherein n' is an integer of 10 or more.

These aromatic polysulfones are easily manufactured by the methods disclosed, for example, in Japanese Patent Publication No. 42-7799 and Japanese Patent Publication No. 47-617, and one or more kinds of them may be optionally selected in accordance with the desired melt blend.

The polymer alloys of the present invention can be prepared using conventional techniques known in the art for producing unitary masses from two or more resins. For example, the alloys can be formed by mixing suitable amounts of the dry powders or pellets of each of the resins by tumbling, followed by further mixing in a suitable compounding device such as an extruder for melt extrusion. The mixing that takes place during conventional injection molding also will suffice to produce the polymer alloys. Other known methods of forming polymer alloys of resins which can be employed include, for example, melt mixing in a Banbury mixer. To form the alloys, the temperature has to be at least high enough to melt the resins employed, but the temperature should be kept sufficiently low to ensure that none of the resins will be degraded. The resulting alloys can be granulated or pelletized, if desired for convenience in handling or subsequent molding operations.

The amounts of each of the polymers in the polymer alloys can vary over a wide range, depending on desired properties. The ratios of the three polymer components in the polymer alloys should be that which is effective to desirably modify one or more physical properties of the poly (arylene sulfide).

Generally, the polymer alloys contain about 5-95 weight percent, preferably about 10-90 weight percent,

most preferably 45-85 weight percent of poly (arylene sulfide), based on the total weight of the resin components, namely the blend composition excluding other compounding components such as fillers, colorants, fibers, etc.

The polymer alloys can contain a suggested range of about 5-95, preferably 15-85 weight percent of the polyetherimide resin, on the same basis.

The polymer alloys further contain about 5-80 weight percent, preferably about 10-50 weight percent of polysulfone, on the same basis.

The polymer alloy compositions optionally can include reinforcing materials such as glass or carbon fibers. The alloy compositions optionally can include filler materials, such as calcium carbonate, quartz, powder, asbestos, silica, finely divided carbon and the like.

The blend compositions can contain additional optional components such as mold corrosion inhibitors, pigments, processing aids, and the like.

Examples provided are intended to assist in a further understanding of the invention. Particular materials and conditions employed are intended to be further illustrative of the invention.

The examples show that blends of poly (arylene sulfide), polyetherimide and poly (aryl sulfone) improve such properties as tensile strength, elongation to break and impact strength when compared with poly (arylene sulfide) and tensile strength and elongation to break when compared with an alloy containing poly (arylene sulfide) and polyetherimide.

Example 1

Various homogeneous physical blends were prepared by mixing a poly (phenylene sulfide) (PPS) powder ("T-4" (cross-linking type), manufactured by Tohpren Co., Ltd.) having a melting point of 294°C and a melt viscosity of 1830 poise at 300°C, with polyetherimide (PEI) pellets having a specific gravity of 1.27, and polysulfone (PSF) pellets having a specific gravity of 1.24.

The PEI was obtained from General Electric Company under the trademark "Ultem 1000," which had recurring units of the following formula :

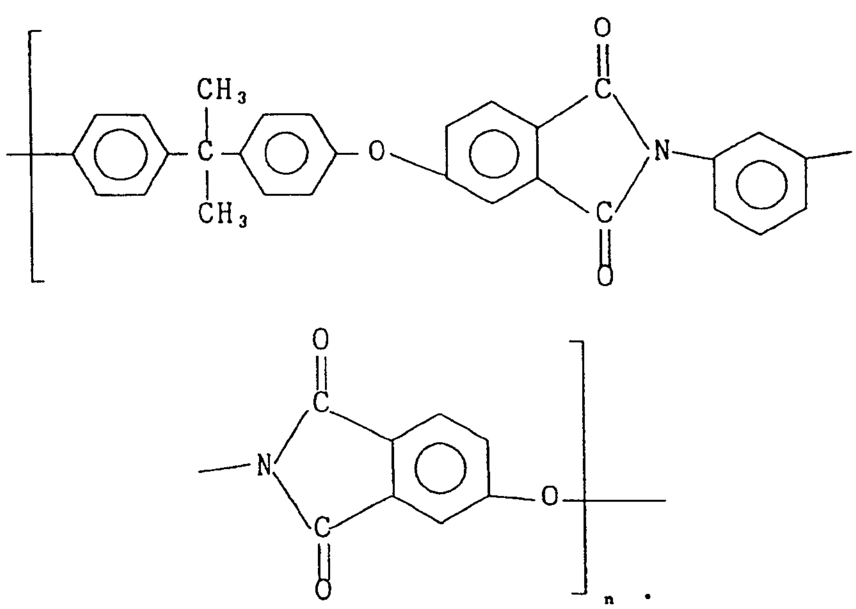

The PSF was obtained from Amoco under the trademark "Udol P-1700," rich had recurring units of the following formula :

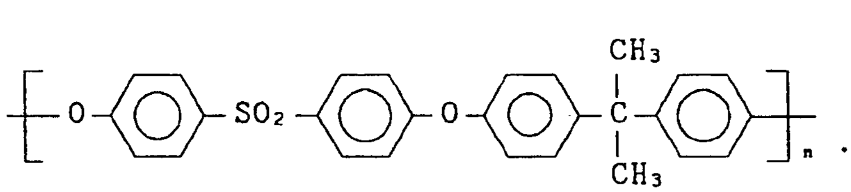

Each polymer was dried at 120°C for 6 hours in the presence of air. The appropriate weight of each polymer was taken and thoroughly mixed. Each blend of polymers was extruded at 295°C from a Werner-Pfleiderer ZSK-30 twin screw extruder to form granules after passing through a pelletizer. Prior to injection molding, the pellets were first dried in air at 100 °C for 24 hours and then in vacuum at 120°C for 48 hours. Test specimens of each blend were prepared by injection molding. The results of physical tests on the specimens are presented in Tables 1-4.

Table 1

| Run No. | 1 | 2 | 3 | 4 | 5 | 6 |
|---|---|---|---|---|---|---|
| Composition (weight %) | | | | | | |
| PPS | 100 | 96 | 85 | 70 | 0 | 0 |
| PEI | 0 | 4 | 15 | 15 | 100 | 0 |
| PSF | 0 | 0 | 0 | 15 | 0 | 100 |
| Mechanical Properties | | | | | | |
| Tensile Strength[a] at Yield, MPa | – | – | – | – | 118 | 75 |
| Tensile Strength[b] at Break, MPa | 65 | 66 | 68 | 69 | 90 | 60 |
| Elongation %[c] | 5 | 5 | 6 | 7 | 27 | 116 |
| Modulus at 3%[d] Elongation, MPa | 1600 | 1508 | 1496 | 1436 | 1807 | 1620 |
| Izod Impact[e] Strength (Notched), J/M | 36 | 37 | 23 | 46 | 59 | 76 |

Note: a: ASTM D638

b: ASTM D638

c: ASTM D638

d: ASTM D638

e: ASTM D256

The data in Table 1 show that the homogeneous binary blends of PPS and PEI (Runs 2 and 3) have higher tensile and impact strengths than the original PPS (Run 1) while the ternary blend (Run 4) has higher impact strength and tensile strength than the binary PPS/PEI blend (Run 3).

Table 2

| Run No. | 7 | 8 | 9 | 10 |
|---|---|---|---|---|
| **Composition (weight %)** | | | | |
| PPS | 70 | 67 | 58 | 28 |
| PEI | 30 | 28 | 25 | 12 |
| PSF | 0 | 5 | 17 | 60 |
| **Mechanical Properties** | | | | |
| Tensile Strength at Yield, MPa | – | – | – | 74 |
| Tensile Strength at Break, MPa | 56 | 78 | 73 | 61 |
| Elongation % | 4 | 7 | 7 | 124 |
| Modulus at 3% Elongation, MPa | 1573 | 1575 | 1620 | 1440 |
| Izod Impact Strength (Notched), J/M | 41 | 46 | 54 | 46 |

The data in Table 2 show that the binary blend of PPS and PEI (Run 7) has lower tensile strength and elongation to break than the original PPS (Run 1). The trend is reversed with the incorporation of 5 weight percent of PSF (Run 8). Ternary blends containing 17 and 60 parts of PSF (Runs 9 and 10) also show better mechanical properties than original PPS (Run 1) and binary PPS/PEI blend (Run 7). The ternary blend containing 60 parts of PSF (Run 10) shows yielding and a very high elongation to break value but a lower Izod impact strength than the one containing 17 parts of PSF (Run 9).

Table 3

| Run No. | 11 | 12 | 13 |
|---|---|---|---|
| Composition (weight %) | | | |
| PPS | 50 | 42 | 34 |
| PEI | 50 | 42 | 33 |
| PSF | 0 | 16 | 33 |
| Mechanical Properties | | | |
| Tensile Strength at Yield, MPa | – | 86 | 83 |
| Tensile Strength at Break, MPa | 71 | 86 | 82 |
| Elongation % | 6 | 10 | 10 |
| Modulus at 3% Elongation, MPa | 1650 | 1680 | 1736 |
| Izod Impact Strength (Notched), J/M | 45 | 41 | 55 |

The data in Table 3 show that the 50/50 blend composition of PPS/PEI (Run 11) shows improvement in all the properties compared with the original PPS (Run 1). It is interesting to note that the addition of PSF in the 50/50 PPS/PEI system causes the samples to exhibit yielding and tensile strength, elongation to break and modulus values increase (Runs 12 and 13). At the same time, the increase in the amount of PSF form 16 parts to 33 parts does not appear to have a very significant effect on the properties, barring impact strength.

Table 4

| Run No. | 14 | 15 | 16 | 17 | 18 | 19 |
|---|---|---|---|---|---|---|
| Composition (weight %) | | | | | | |
| PPS | 40 | 30 | 25 | 20 | 15 | 4 |
| PEI | 60 | 70 | 58 | 80 | 70 | 96 |
| PSF | 0 | 0 | 17 | 0 | 15 | 0 |
| Mechanical Properties | | | | | | |
| Tensile Strength at Yield, MPa | – | 94 | 92 | 100 | 96 | 105 |
| Tensile Strength at Break, MPa | 84 | 70 | 70 | 71 | 65 | 79 |
| Elongation % | 7 | 54 | 97 | 23 | 31 | 17 |
| Modulus at 3% Elongation, MPa | 1515 | 1571 | 1526 | 1578 | 1571 | 1600 |
| Izod Impact Strength (Notched) J/M | 59 | 63 | 46 | 65 | 43 | 46 |

Table 4 shows the data for blends having less than 50 parts of poly (phenylenesulfide). All the blends (Runs 14-19) show higher tensile strength, elongation to break and impact strength than the original PPS (Run 1). Compared with binary blends of PPS/PEI, the ternary blends of PPS/PEI/PSF show higher elongation to break values (Run 15 vs. Run 16) and (Run 17 vs. Run 18).

As the data indicate, all binary PPS/PEI blends and ternary PPS/PEI/PSF blends studied show a marked improvement in the physical properties examined. In most cases, the incorporation of PSF in the binary PPS/PEI blend leads to an improvement in the elongation to break values.

It is to be understood that the foregoing detailed description is given merely by way of illustration.

## Claims

1. A thermoplastic polymer alloy comprising :
   (a) 5-95 weight % of a poly (arylene sulfide),
   (b) 5-95 weight % of a polyetherimide, and
   (c) 5-80 weight % of a poly (aryl sulfone).

2. A thermoplastic polymer alloy as claimed in claim 1 comprising :
   (a) 10-90 weight % of a poly (arylene sulfide),
   (b) 15-85 weight % of a polyetherimide, and
   (c) 10-50 weight % of a poly (aryl sulfone).

3. A thermoplastic polymer alloy as claimed in claim 1 or claim 2 wherein said poly (arylene sulfide) is formed from recurring units of the formula.

   -[ArS]-

   wherein Ar is a divalent aromatic group.

4. A thermoplastic polymer alloy as claimed in claim 3, wherein Ar is one of the following groups :

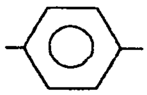,

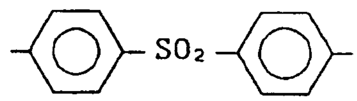,

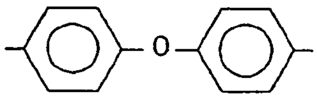,

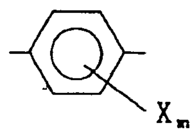,

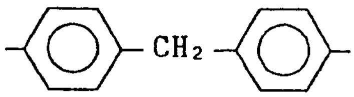,

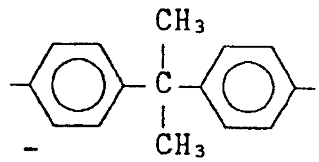

- 18 -

wherein X is an alkyl group and m is an integer from 1 to 4.

5. A thermoplastic polymer alloy as claimed in any one of the preceding claims wherein said polyetherimide comprises essentially chemically combined units of the formula

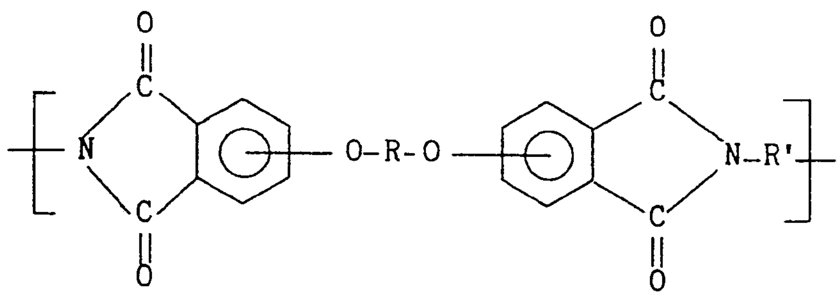

wherein R is selected from the group consisting of :
(a) the groups

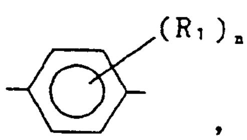,

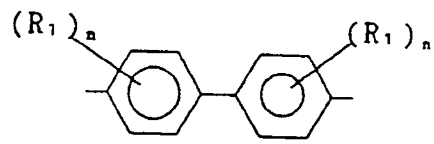, and

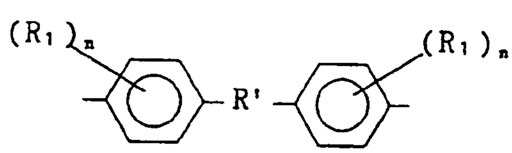

wherein $R_1$ is a $C_1$-$C_6$ alkyl group or an aryl group, n is O or an integr from 1 to 4, and $(R_1)_n$ may differ from each other when two or more such groups are present in R ; or
(b) divalent organic radicals of the formula :

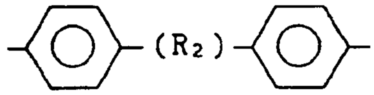

wherein $R_2$ is - $(CH_2)_y$- ;
Y is an integer from 1 to 5, and
$R^1$ is a divalent organic radical selected from the group consisting of (i) aromatic hydrocarbon radicals having 6-20 carbon atoms, (ii) alkylene radicals and cycloalkylene radicals having from 2-20 carbon atoms, (iii) $C_{2-8}$ alkylene terminated polydiorganosiloxanes, (iv) divalent radicals represented by the formula :

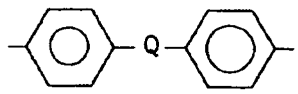

wherein Q is selected from the group consisting of

$-O-$, 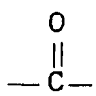, 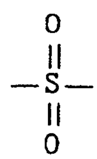, $-S-$, and $-(CH_2)_x-$

wherein x is an integer from 1 to 5.

6. A thermoplastic polymer alloy as claimed in any one of the preceding claims, wherein said poly (aryl sulfone) is selected from the following :

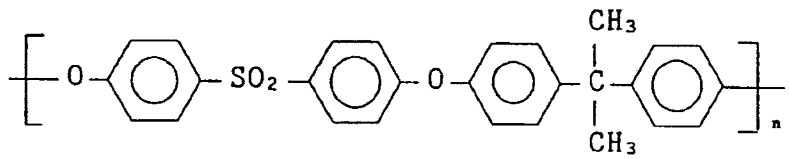 ,

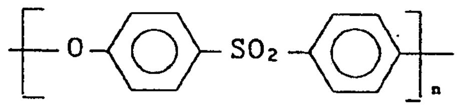 ,

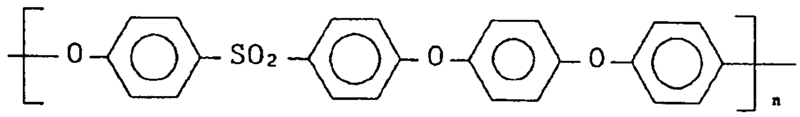 ,

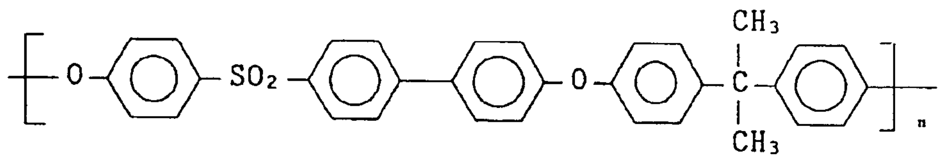 ,

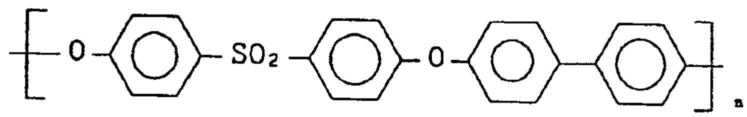 ,

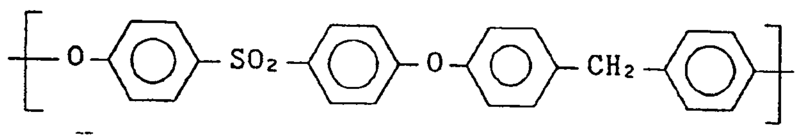 ,

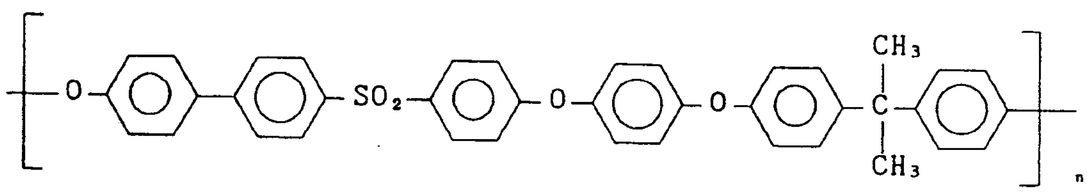 ,

wherein $n^1$ is an integer of 10 or more.

7. A thermoplastic polymer alloy as claimed in any one of the preceding claims, further comprising a filler material and/or a reinforcing material.

8. A method of producing a themoplastic polymer alloy comprising (a) 5-95 weight % of a poly (arylene sulfide), (b) 5-95 weight % of a polyetherimide, and (c) 5-80 weight % of a poly (aryl sulfone), comprising the step of mixing said poly (arylene sulfide), said polyetherimide, and said poly (aryl sulfone) at a temperature which is sufficiently high to cause the components to form a thermoplastic polymer alloy and sufficiently low to prevent degradation of the components.

9. A moulded article comprising or formed from a thermoplastic polymer alloy as claimed in any one of claims 1 to 7,